# EUROPEAN PATENT APPLICATION

(11) **EP 1 955 820 A1**
(43) Date of publication of application: **13.08.2008**
(21) Application number: 08101142.1
(22) Date of filing: 31.01.2008
(51) Int. Cl.: B25B 23/00, B23B 51/10, B25B 21/00

(54) **Multi-bit drive with drywall dimpler**

(30) Priority: 07.02.2007 US 672338
(71) Applicant: Black & Decker Inc., Newark, Delaware 19711 (US)
(72) Inventor: Peters, Michael P, Lutherville, MD 21093 (US)
(74) Representative: Bell, Ian Stephen

(57) **Abstract**

A rotary tool includes a tool holder, a reversible bit, and an outer sleeve. The tool holder includes a socket and a shank. The socket includes an opening extending rearwardly from an end thereof. The shank is integral with and extends rearwardly from the socket and includes a non-circular cross-section. The reversible bit includes an inner sleeve, a first reversible bit driver, and a second reversible bit driver. The inner sleeve is disposed within the socket and rotates with the tool holder. One of the first and second bit drivers contains a bit having an end extending axially out of the socket opening. The outer sleeve is disposed over the socket and includes a first end having an opening. The bit end extends outwardly beyond the outer sleeve opening a distance equal to a desired depth of a drywall dimple.

## Description

The present disclosure relates to a rotatable tool, and more specifically to a tool holder having a reversible bit assembly and a drywall dimpler.

The statements in this section merely provide background information related to the present disclosure and may not constitute prior art.

When purchasing various rotary tools, professional tradesmen and do-it-yourselfers are frequently required to purchase several of a series of tool or driver configurations that have different types of driving ends, e.g. Philips .RTM., Torx .RTM. and flat head, as well as various hexagonal nut driver configurations in metric and English units. The combinations of different tools for a given task may require the use of various different driving ends. Thus, the cost associated with having a complete set of tools is increased since each tool is generally sold separately. Moreover, there is a significant drawback for a user of many different tools in that the user must carry with him or her a specific tool for each task to be accomplished. For example, a user may need to bring multiple screw drivers and nut drivers to accomplish a single task. As a consequence, the user's tool belt or tool box soon becomes cluttered with these various implements resulting in an increase in the weight of the tools the user must carry from one location to another. Likewise, boaters, motorists, bicyclists, and homeowners have a need for a single multipurpose rotary tool that can be stored conveniently and compactly for use in an emergency or otherwise.

Further, when using a rotary tool to drive a fastener into drywall it is often desirable to create a dimple in the drywall where the fastener is to be inserted so that the fastener head can be countersunk into the drywall. The depth of the dimple may be difficult for a user to gauge without any assistance, as it is merely dependent on the force applied by the user. Alternatively, a separate tool may be used to create a predetermined depth dimple. However, this only compounds the drawback mentioned above by the addition of yet another tool to the user's collection.

All of these developments have created a need for a single rotary tool that has a variety of functions and serves as a multiple rotary tool, while eliminating the aforementioned inconveniences. However, this need has not been easily achieved. Hence, there exists a need for a single rotary tool and kit that functions as a multipurpose tool which can be stored and organized in a convenient manner and having the approximate size of a conventional single purpose rotary tool.

According to the present teachings, a rotary tool includes a tool holder, a reversible bit, and an outer sleeve. The tool holder includes a socket and a shank. The socket includes an opening extending rearwardly from an end thereof. The shank is integral with and extends rearwardly from the socket and includes a non-circular cross-section. The reversible bit includes an inner sleeve, a first reversible bit driver, and a second reversible bit driver. The inner sleeve is disposed within the socket and rotates with the tool holder. One of the first and second bit drivers contains a bit having an end extending axially out of the socket opening. The outer sleeve is disposed over the socket and includes a first end having an opening. The bit end extends outwardly beyond the outer sleeve opening a distance equal to a depth of a drywall dimple.

Further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
Figure 1 is an exploded view of a rotary tool in association with a power tool having a keyless chuck or coupler interdisposed therebetween;
Figure 2 is a cross-sectional view showing the inner coupling between the rotary tool and the coupler of Figure 1;
Figure 3 is a cross-sectional view of the rotary tool of Figure 1; and
Figure 4 is an enlarged cross-sectional view of a portion of the rotary tool shown in Figure 3.

The following description is merely exemplary in nature and is not intended to limit the present disclosure, application, or uses.

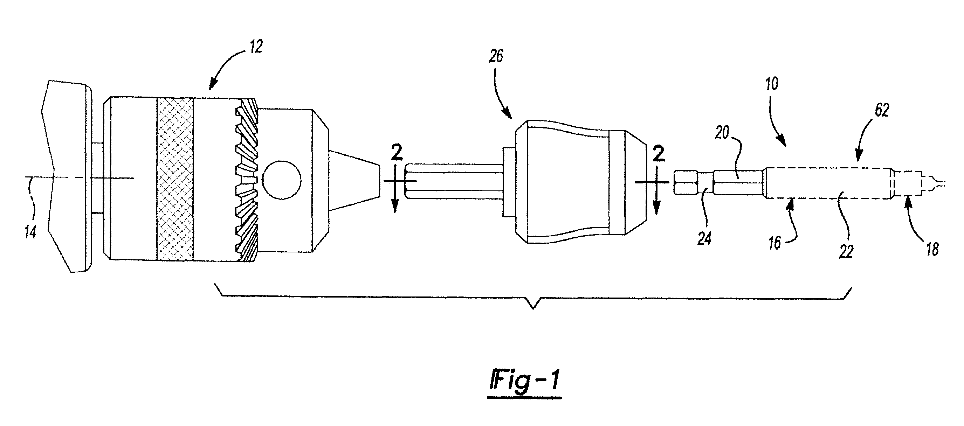

As shown in Figures 1-4, a rotatable tool 10 is connectable to a power tool 12 or simply a handle (not shown) for rotation about an axis 14. As is described below, the rotatable tool 10 includes a tool holder 16 and a reversible bit assembly 18. The bit assembly 18 is releasably connectable to the tool holder 16, such as by spring biased detent balls, whereby the tool 10 provides six separate drivers for rotating a workpiece. The six drivers may include four bit drivers and two nut drivers. The flexibility of the tool 10 with regard to the number of drivers as well as the tool being configured to allow rotation by a power tool or handle provides advantages not previously provided in the art.

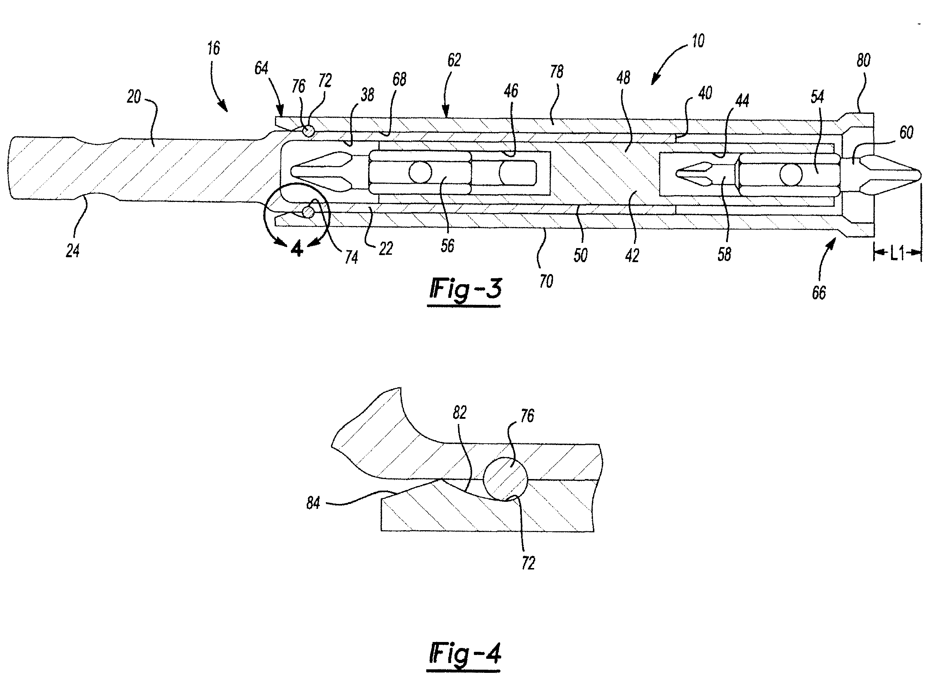

As shown in Figures 1 and 3, the tool holder 16 includes a shank 20 that is integral with, and that extends rearwardly from, a socket 22. The shank 20 may be hex-shaped and includes a circumferential groove 24. By this construction, the tool holder 16 is connectable to the drill or handle either directly or through a quick release coupler 26.

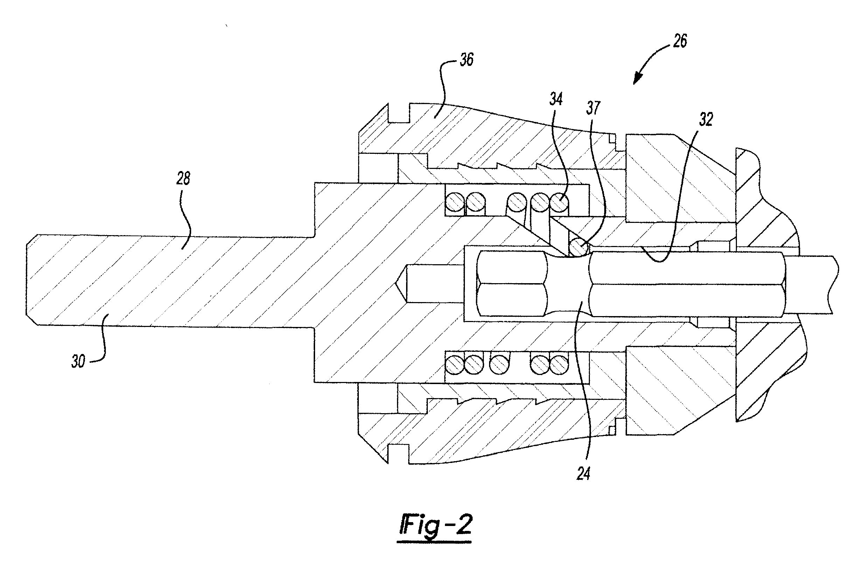

The coupler 26 is generally illustrated in Figure 2 to include a body 28, having a shaft 30 and an axial opening 32, a detent spring 34, and an actuating sleeve 36. The tool holder shank 20 is disposable in the opening 32 wherein a spring biased pin 37 engages the groove 24 to retain the shank 20 within the opening 32 for rotation with the coupler 26. A more detailed description of the coupler 26 is provided in U.S. Patent No. 6,053,675, assigned to the assignee of the present application, and entitled "Quick-Acting Tool Bit Holder", the disclosure of which is hereby incorporated by reference.

With reference to Figure 3, the tool socket 22 includes a bore 38 that extends axially inward from socket end 40 and may also be preferably hex-shaped. The reversible bit assembly 18 includes a sleeve 42 having a pair of axial storage cavities 44 and 46 separated by a web 48. The outer surface 50 of the sleeve 42, each of the cavities 44 and 46, as well as a center section 52 of first and second bit drivers 54 and 56 are each again preferably hex-shaped such that each of the bit drivers 54 and 56 rotate with the sleeve 42 and socket 22. The configuration of a representative tool holder and bit assembly, including the socket, sleeve, and bit drivers, are illustrated and described in greater detail in commonly assigned U.S. Patent No. 6,354,177, issued March 12, 2002 to Peters and entitled "6 in 1 Rotary Tool," the disclosure of which is hereby incorporated by reference.

Each of the first and second bit drivers 54 and 56 are reversible within their respective cavities 44 and 46 such that either of the bit ends 58 or 60 can extend from sleeve 42. Additionally, the sleeve 42 is reversible within the socket bore 38 such that either the first or second bit drivers 54, 56 operably extend from the socket 22. Accordingly, the tool 10 may be configured such that any of the four bit driver ends operably project from the socket 22. Further, either of the bit drivers 54 and 56 may be removed from the sleeve 42 to expose the hex-shaped cavity 44 or 46 for use as a nut driver. Finally, the tool's sixth driver is provided by removing the reversible bit assembly 18 from the socket bore 38 to expose the hex-shaped bore 38 for use as a second nut driver. It should be noted that bore 38 is larger than cavities 44 and 46, thereby drivably accommodating larger nuts. The bore 38 may be a 5/16 inch hex-opening while the cavities 44, 46 may each be ¼ inch hex-openings.

An outer sleeve 62 extends over socket 22, sleeve 42, and bit drivers 54, 56. Sleeve 62 includes first and second ends 64, 66. Sleeve 62 further includes a radially inner portion 68 and a radially outer portion 70. First end 64 may include a recess 72 in inner portion 68. Socket 22 may also include a recess 74 near shank 20. A C-clip 76 may be located in recess 74 and may be engaged with recess 72, as seen in Figure 3. Sleeve 62 may be removed and replaced upon application of sufficient force by a user.

Sleeve 62 may be a substantially cylindrical body 78 with a radially outwardly extending portion 80 located at second end 66. Specifically, radially outwardly extending portion 80 may have outer and inner diameters greater than the outer and inner diameters of the substantially cylindrical body 78. The inner diameter of radially outwardly extending portion 80 may be slightly larger than the diameter of drywall fastener head. For example, radially outwardly extending portion 80 may have an inner diameter of approximately 9 mm. Alternatively, the inner diameter may be greater.

Sleeve 62 may provide for an outward extent of a bit end 60 beyond radially outwardly extending portion 80 a distance L1 generally equal to that required for a drywall dimple when C-ring is located in recess 74, thereby limiting the depth of a drywall dimple to a predetermined depth. More specifically, distance L1 may be between 1.5 mm and 2.3 mm beyond radially outwardly extending portion 80. Additionally, the arrangement of sleeve 62 may be used to limit the insertion depth of a fastener based on the relation between radially outwardly extending portion 80, bit end 60, and a fastener head.

Sleeve 62 may be rotatably mounted on socket 22. More specifically, there may be a clearance between inner portion 68 and socket 22. Additionally, recess 72 may extend continuously about a circumference of inner portion 68, allowing C-clip to rotate therein. Alternatively, a rotation preventing feature (not shown) may be formed on sleeve 62 or socket 22**.** Sleeve 62 may be formed from a variety of materials including metals and plastics. Additionally, an elastomer coating may be formed on an outer portion thereof.

As previously noted, sleeve 62 may be rotatably engaged with socket 22. This rotatable engagement allows sleeve 62 to remain generally stationary as socket 22 is rotated to drive a fastener or to drive bit end 60 into drywall to create a dimple. A user may therefore hold sleeve 62 to provide added stability when using rotatable tool 10. Additionally, this allows a user to have sleeve 62 abut a wall or other structure during use of rotatable tool 10 without causing damage that may otherwise result from use of a traditional rotatable tool.

Sleeve 62 is removable from socket 22, allowing access to sleeve 42. More specifically, as seen in Figure 4, recess 72 may include ramped surfaces 82, 84. Ramped surface 82 may generally facilitate removal of sleeve 62 and ramped surface 84 may generally facilitate replacement of sleeve 62. This allows for changing of bits 58, 60, or reversal sleeve 42 for access to bit driver 56. This removable feature also allows sleeve 62 to cover a greater portion of bit 58, 60, providing greater retention thereof as well as the drywall dimple feature.

## Claims

1. A rotary tool comprising:
a tool holder including a socket and a shank, the socket having a first end, a second end, and an opening extending rearwardly from said first end toward said second end, said shank being integral with and extending rearwardly from said second end of said socket, said shank having a non-circular cross-section;
a reversible bit having a sleeve, a first reversible bit driver, and a second reversible bit driver, said sleeve including first and second axial end cavities, said first bit driver disposed in said first axial end cavity and coupled to rotate with said sleeve, said second bit driver disposed in said second axial end cavity and coupled to rotate with said sleeve, said first and second axial end cavities being of sufficient axial length to accommodate said first and second reversible bit drivers, and wherein said sleeve is disposed within said socket opening such that said sleeve rotates with said tool holder and one of said first and second bit drivers contains a bit having an end extending axially out of said socket opening; and
an outer sleeve disposed over said socket, said outer sleeve including a first end having an opening, said bit end extending outwardly beyond said outer sleeve opening a distance equal to a desired depth of a drywall dimple.

2. The rotary tool of claim 1, wherein said socket defines a hexagonal 5/16-inch nut driver to rotate a workpiece.

3. The rotary tool of claim 1, wherein said first axial end cavity defines a hexagonal 1/4-inch nut driver to rotate a workpiece.

4. The rotary tool of claim 1, wherein said second axial end cavity defines a hexagonal 1/4-inch nut driver to rotate a workpiece.

5. The rotary tool of claim 1, wherein said desired depth is between 1.5 mm and 2.3 mm.

6. The rotary tool of claim 1, wherein said outer sleeve is rotatable relative to said socket.

7. The rotary tool of claim 1, wherein said outer sleeve has an inner diameter greater than 9 mm.

8. The rotary tool of claim 1, wherein said outer sleeve is removably coupled to said socket.

9. The rotary tool of claim 8, wherein said socket includes an engagement member, said outer sleeve including a recess in an inner surface thereof receiving said engagement member therein, said recess including a ramped surface configured to facilitate removal of said outer sleeve.

10. The rotary tool of claim 1, wherein said bit end and said outer sleeve first end are configured to drive a fastener and limit an insertion depth of the fastener.

11. A rotary tool comprising:
a tool holder including a shank and a socket, said shank being coupled for rotation with said socket and adapted to be coupled to a power driven rotary drive, said socket defining a first nut driver for rotating a workpiece;
a reversible bit including a sleeve disposed in an opening in said socket and defining first and second end cavities, a first bit driver having a first bit end and a second bit end, and a second bit driver having a first bit end and a second bit end, said first bit driver being selectively disposable within said first end cavity for rotation with said sleeve in a first position where said first bit end extends from said sleeve and said socket and a second position where said second bit end extends from said sleeve and said socket, said second bit driver being selectively disposable within said second end cavity for rotation with said sleeve in a first position where said first bit end of said second bit driver extends from said sleeve and said socket and a second position where said second bit end of said second bit driver extends from said sleeve and said socket, said first bit driver being removable from said first end cavity wherein said first end cavity defines a second nut driver for rotating a workpiece, said first end cavity being smaller than said socket; and
an outer sleeve disposed over said socket, one of said bit ends extending axially out of said socket opening, said outer sleeve including a first end having an opening, said bit end extending outwardly beyond said outer sleeve opening a distance equal to a desired depth of a drywall dimple.

12. The rotary tool of claim 11, wherein said depth is between 1.5 mm and 2.3 mm.

13. The rotary tool of claim 11, wherein said outer sleeve opening has an inner diameter greater than 9 mm.

14. The rotary tool of claim 11, wherein said outer sleeve is rotatable relative to said socket.

15. The rotary tool of claim 11, wherein said outer sleeve is removably coupled to said socket.

16. The rotary tool of claim 15, wherein said socket includes an engagement member, said outer sleeve including a recess in an inner surface thereof receiving said engagement member therein, said recess including a ramped surface configured to facilitate removal of said outer sleeve.

17. The rotary tool of claim 11, wherein said bit end and said outer sleeve first end are configured to drive a fastener and limit an insertion depth of the fastener.

18. A tool assembly comprising:
a quick release coupler having a shank, a body, and a detent assembly, said shank adapted to be coupled to a handle or a power tool, said body defining a passage;
a tool holder having a shank and a socket, said shank being disposable in said passage and engaged by said detent assembly whereby said tool holder is coupled for rotation with said coupler;
a reversible bit having a sleeve disposed in an opening in said socket, a first bit driver, and a second bit driver, said sleeve including first and second axial end cavities, said first bit driver disposed in said first axial end cavity and coupled to rotate with said sleeve, said second bit driver disposed in said second axial end cavity and coupled to rotate with said sleeve, and wherein said sleeve is disposed within said socket opening such that said sleeve rotates with said tool holder and one of said first and second bit drivers extends axially out of said socket opening, said one of said first and second bit drivers extending from said opening including a bit end extending therefrom; and
an outer sleeve disposed over said socket and including a first end having an opening, said bit end extending outwardly beyond said outer sleeve opening a distance equal to a desired depth of a drywall dimple.

19. The rotary tool of claim 18, wherein said depth is between 1.5 mm and 2.3 mm.

20. The rotary tool of claim 18, wherein said outer sleeve opening has an inner diameter greater than 9 mm.

21. The rotary tool of claim 18, wherein said outer sleeve is removably coupled to said socket.

22. The rotary tool of claim 21, wherein said socket includes an engagement member, said outer sleeve including a recess in an inner surface thereof receiving said engagement member therein, said recess including a ramped surface configured to facilitate removal of said outer sleeve.

23. The rotary tool of claim 18, wherein said bit end and said outer sleeve first end are configured to drive a fastener and limit an insertion depth of the fastener.
